# EUROPEAN PATENT APPLICATION

(11) **EP 4 180 887 A1**
(43) Date of publication of application: **17.05.2023**
(21) Application number: 20944889.3
(22) Date of filing: 13.07.2020
(51) Int. Cl.: G05B 19/418

(54) **WORK PLAN SPECIFICATION PROGRAM, WORK PLAN SPECIFICATION METHOD, AND INFORMATION PROCESSING DEVICE**

(71) Applicant: FUJITSU LIMITED, Kawasaki-shi, Kanagawa 211-8588 (JP)
(72) Inventor: TANIGUCHI, Jun, Kawasaki-shi, Kanagawa 211-8588 (JP); YAMAZAKI, Takashi, Kawasaki-shi, Kanagawa 211-8588 (JP)
(74) Representative: Hoffmann Eitle
(86) International application number: PCT/JP2020/027259
(87) International publication number: WO 2022/013921

(57) **Abstract**

A work plan specifying program that specifies a predetermined order under conditions that, in a work line that includes a cutting device and a working device and generates a plurality of objects in the predetermined order, a predetermined amount of a material is partially cut by the cutting device from a raw material for each of the plurality of objects, the cut material is processed by the working device, the raw material is switched to a next raw material when the raw material lacks in the cutting device, settings for at least one of the cutting device and the working device are determined for each of the plurality of objects, and a changeover is performed to change the settings of at least one of the cutting device and the working device in a case where the settings are changed, and that causes a computer to execute processing that includes optimizing an objective function that reflects the changeover and an excess amount of each raw material that are determined according to an input order of the plurality of objects to the work line.

## Description

### FIELD

This case relates to a work plan specifying program, a work plan specifying method, and an information processing device.

### BACKGROUND

A technique is disclosed for optimizing objective functions such as a production cost or a production completion time when an input order of products to a production line is optimized (for example, refer to Patent Documents 1 and 2).

### CITATION LIST

### PATENT DOCUMENT

Patent Document 1: Japanese Laid-open Patent Publication No. 2005-092827
Patent Document 2: Japanese Laid-open Patent Publication No. 2019-175488

### SUMMARY

### [TECHNICAL PROBLEM]

In a production line, it is required to use up materials used for products. In order to use up materials, a planning method has been known that solves combinatorial optimization problems such as a cutting stock problem or a bin packing problem. However, if a product input order is switched in order to reduce an excess amount of materials, the number of changeovers in the production line increases, and there is a possibility that an objective function reflecting the changeover is deteriorated.

In one aspect, an object of the present invention is to provide an information processing device, a work plan specifying method, and a work plan specifying program that can improve an objective function reflecting a changeover while suppressing an excess material amount.

### [SOLUTION TO PROBLEM]

In one mode, a work plan specifying program that specifies a predetermined order under conditions that, in a work line that includes a cutting device and a working device and generates a plurality of objects in the predetermined order, a predetermined amount of a material is partially cut by the cutting device from a raw material for each of the plurality of objects, the cut material is processed by the working device, the raw material is switched to a next raw material when the raw material lacks in the cutting device, settings for at least one of the cutting device and the working device are determined for each of the plurality of objects, and a changeover is performed to change the settings of at least one of the cutting device and the working device in a case where the settings are changed, and that causes a computer to execute processing including optimizing an objective function that reflects the changeover and an excess amount of each raw material that are determined according to an input order of the plurality of objects to the work line.

According to an aspect of the embodiments, a work plan specifying program that specifies a predetermined order under conditions that, in a work line that includes a cutting device and a working device and generates a plurality of objects in the predetermined order, a predetermined amount of a material is partially cut by the cutting device from a raw material for each of the plurality of objects, the cut material is processed by the working device, the raw material is switched to a next raw material when the raw material lacks in the cutting device, settings for at least one of the cutting device and the working device are determined for each of the plurality of objects, and a changeover is performed to change the settings of at least one of the cutting device and the working device in a case where the settings are changed, the work plan specifying program causing a computer to execute a process, the process includes optimizing an objective function that reflects the changeover and an excess amount of each raw material that are determined according to an input order of the plurality of objects to the work line.

### [ADVANTAGEOUS EFFECTS OF INVENTION]

It is possible to improve an objective function reflecting a changeover while suppressing an excess material amount.

### BRIEF DESCRIPTION OF DRAWINGS

FIGs. 1A and 1B are diagrams illustrating a method for minimizing an excess material amount;
FIG. 2 is a functional block diagram illustrating an overall configuration of an information processing device according to a first embodiment;
FIG. 3 is a diagram illustrating a production line model stored in a production line model storage unit;
FIG. 4 is a diagram illustrating production order information;
FIGs. 5A to 5D are diagrams illustrating information stored in a production master;
FIG. 6 is a diagram illustrating a flowchart executed by the information processing device;
FIG. 7 is a diagram illustrating a result obtained by repeating switching of an input order;
FIG. 8 is a diagram for explaining a simulation;
FIG. 9 is a diagram for explaining a simulation;
FIG. 10 is a diagram illustrating a simulation result;
FIG. 11 is a diagram illustrating an effect of an embodiment;
FIGs. 12A to 12C are diagrams illustrating information stored in the production master; and
FIG. 13 is a block diagram illustrating a hardware configuration of each unit other than a display device of the information processing device.

### DESCRIPTION OF EMBODIMENTS

In a production line, it is required to use up materials used for products without waste. In order to use up materials, a planning method has been known that solves combinatorial optimization problems such as a cutting stock problem or a bin packing problem.

Furthermore, it is also required to shorten a production completion time to meet a delivery deadline. In a case where the production completion time is shortened in order to meet the delivery deadline, a planning method is known for reflecting a processing time of each device in a production process, the number of works in progress, or the like in a scheduler or a line simulator and performing optimization by an algorithm.

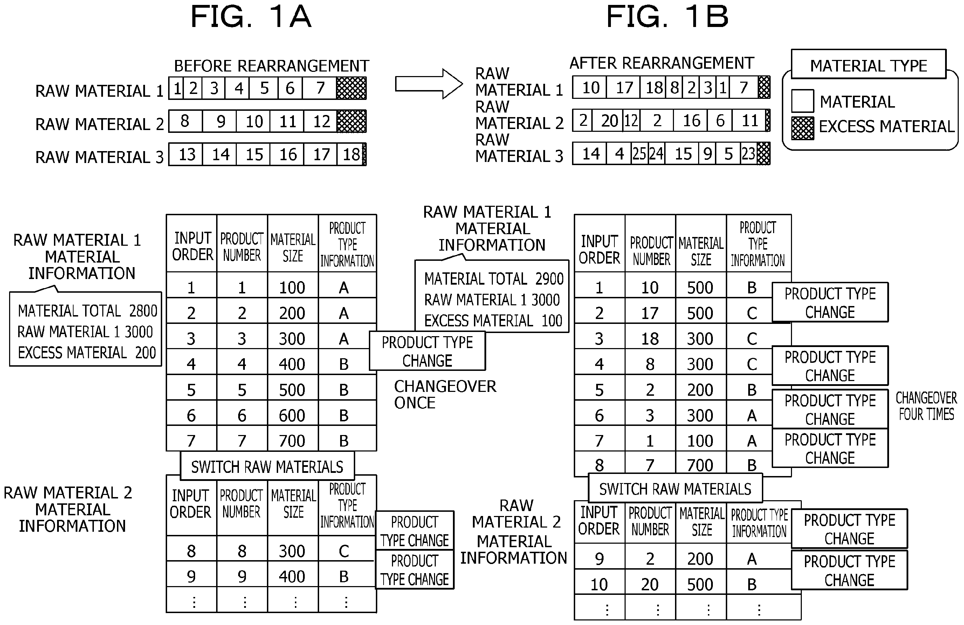

FIGs. 1A and 1B are diagrams illustrating a method for minimizing an excess material amount. Raw materials 1 to 3 are members with the same standard and have the same material and the same shape, and can be substituted for each other. The raw materials 1 to 3 are partially cut by a cutting device and are used as parts of products by a processing device.

In FIG. 1A, material information regarding the raw material 1 is illustrated. Furthermore, in FIG. 1A, an input order in which each product is input to a production line is described. In the example in FIG. 1A, a product with a product number 1 is input to the production line first, and then, a product with a product number 2 is input to the production line second. A material size indicates a size of an amount of a raw material used for each product. In the example in FIG. 1A, an amount of 100 is used for the product with the product number 1, and an amount of 200 is used for the product with the product number 2.

Product type information represents settings of at least one of the cutting device and the processing device. For example, a type of a saw of the cutting device is changed according to a product type. Alternatively, a processing method of the processing device is changed according to the product type. Therefore, since it is needed to change the settings of at least one of the cutting device and the processing device when the product type information changes, a changeover is needed. In the example in FIG. 1A, although a changeover is not needed in the middle for the products with the product numbers 1 to 3, it is needed to perform a changeover when a product with a product number 4 is input to the production line.

Furthermore, in FIG. 1A, material information regarding the raw material 2 is illustrated. As illustrated in FIG. 1A, the raw material 2 is used from a product with a product number 8 that is an eighth input. A product type C is set to the product with the product number 8. Therefore, a changeover to switch the product type from B to C is performed. A product type B is set to a next product with a product number 9 that is a ninth input. Therefore, a changeover to switch the product type from C to B is performed.

In the upper part of FIG. 1A, an excess material amount of each raw material in this case is illustrated. Since a material size is different for each product, an excess material amount is generated. In the settings in FIG. 1A, when it is assumed that the size of the raw material be 3000, a total material size of the products with the product numbers 1 to 7 is 2800. Therefore, the excess material amount is 200. For the raw materials 2 and 3, an excess material amount is also generated.

In order to reduce these excess material amounts as possible, it is sufficient to change a combination of products using the respective raw materials. FIG. 1B illustrates a case where an order of products to be input to the production line is switched in order to reduce the excess material amount as possible. In the example in FIG. 1B, since a total material size of products used for the raw material 1 is 2900, the excess material amount is 100. Therefore, the excess material amount can be reduced as compared with a case of FIG. 1A.

However, in the example in FIG. 1B, since the product type is changed four times for the raw material 1, the changeover is performed four times. If the number of changeovers increases, there is a possibility that an objective function such as a production completion time reflecting the changeovers is deteriorated.

Therefore, in the following embodiments, an information processing device, a work plan specifying method, and a work plan specifying program that can improve an objective function reflecting a changeover while suppressing an excess material amount will be described.

### [First Embodiment]

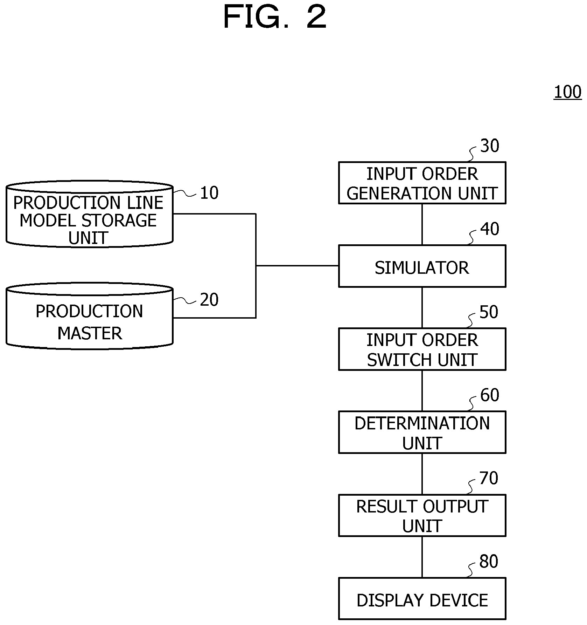

FIG. 2 is a functional block diagram illustrating an overall configuration of an information processing device 100 according to a first embodiment. The information processing device 100 is a server for optimization processing or the like. As illustrated in FIG. 2, the information processing device 100 includes a production line model storage unit 10, a production master 20, an input order generation unit 30, a simulator 40, an input order switch unit 50, a determination unit 60, a result output unit 70, a display device 80, or the like. The display device 80 is a device that displays a processing result of the information processing device 100 or the like and is a display or the like.

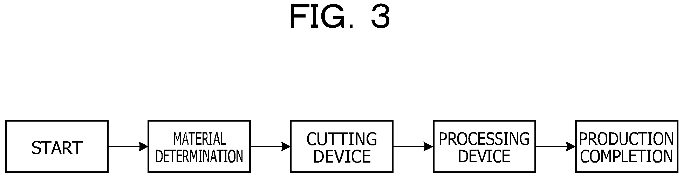

The production line model storage unit 10 stores a production line model. FIG. 3 is a diagram illustrating the production line model stored in the production line model storage unit 10. As illustrated in FIG. 3, the production line model has a configuration in which a "start" cell, a "material determination" cell, a "cutting device" cell, a "processing device" cell, and a "production completion" cell are arranged in order.

A plurality of products is input to the "start" cell one by one according to an input order. In each cell, the product stays until a processing time uniquely set to the product has elapsed. When the processing time elapses, if there is no product in a next moving destination cell, the product moves to the cell.

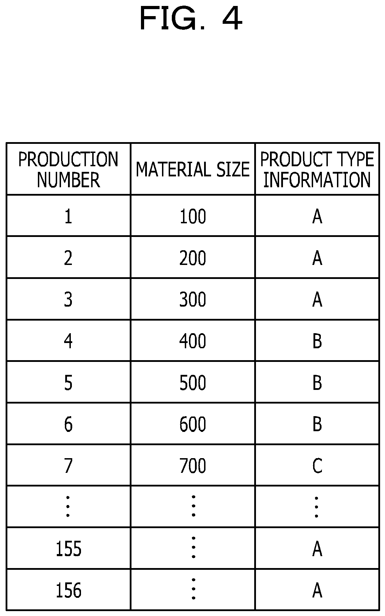

The production master 20 stores production order information in which a size of a material to be used and product type information are associated with a product number. FIG. 4 is a diagram illustrating the production order information. As illustrated in FIG. 4, the size of the material to be used and the product type information are associated with each product number. Since the product number is a unique number for each product, product numbers of a plurality of products do not overlap.

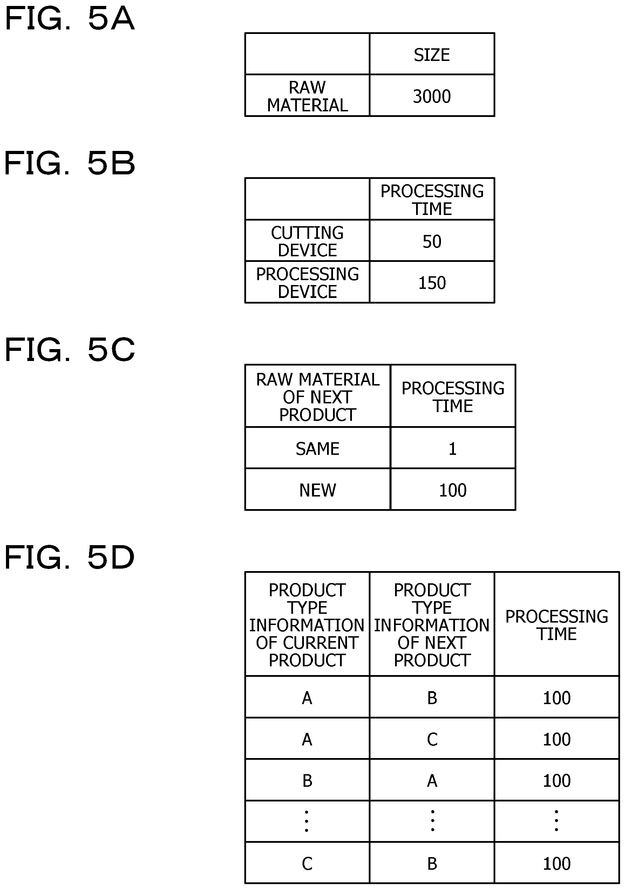

Furthermore, the production master 20 stores raw material information. FIG. 5A is a diagram illustrating the raw material information. As illustrated in FIG. 5A, for example, the size of the raw material (= 3000) is stored as the raw material information.

Furthermore, the production master 20 stores device information. FIG. 5B is a diagram illustrating the device information. As illustrated in FIG. 5B, "50" is stored as a processing time of the cutting device, and "150" is stored as a processing time of the processing device. The processing time of the cutting device is a time for cutting a material from a raw material. The processing time of the processing device is a time for executing processing such as incorporating the cut material into a product. The processing time of the cutting device and the processing time of the processing device may be determined for each product.

Furthermore, the production master 20 stores a changeover condition in a case where a changeover for switching raw materials is performed. FIG. 5C is a diagram illustrating the changeover condition in a case where the changeover for switching the raw materials is performed. In the example in FIG. 5C, a processing time needed for the changeover when the raw materials are switched is set to ° 100", and a processing time when the raw materials are not switched is set to "1".

Furthermore, the production master 20 stores a changeover condition in a case where a changeover for switching product types is performed. FIG. 5D is a diagram illustrating the changeover condition in a case where the changeover for switching the product types is performed. In the example in FIG. 5D, a processing time for each product type switching such as product type switching from a product type A to a product type B is set to "100". The changeover times needed for the respective times of product type switching may be different from each other.

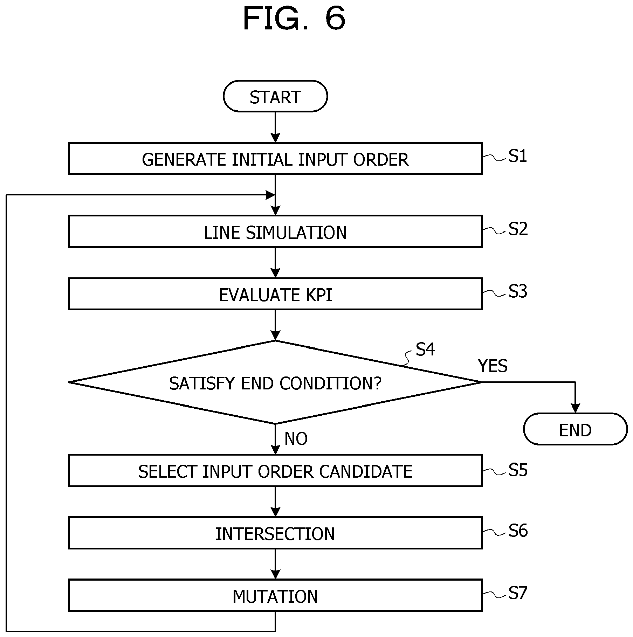

Next, processing of the information processing device 100 will be described with reference to the flowchart in FIG. 6. As illustrated in FIG. 6, the input order generation unit 30 generates an initial input order for all products stored in the production master 20 (step S1). The initial input order is, for example, an order obtained by arranging purchase orders as received from customers and may be input in advance by a user using an input device. Alternatively, the initial input order may be generated by random numbers. Since the initial input order is generated without considering the excess material amount and the production completion time, both of the excess material amount and the production completion time often do not take good values.

Next, the simulator 40 performs a line simulation in a case where products are input to the production line one by one according to the initial input order (step S2).

First, the simulator 40 arranges the products in the "start" cell one by one according to the initial input order. In the "material determination" cell, a material size of the product arriving at the "material determination" cell is sequentially subtracted from a raw material size of the raw material information. Thereby, a remaining amount of the raw material is calculated. If the subtracted result is positive, a processing time in the "material determination" cell is "1". Therefore, the product stays at the material determination cell for only a time corresponding to the processing time "1", and the product moves to the next cell if no product stays in the next cell. If the subtracted result is negative, since a changeover of the raw material occurs, the processing time in the "material determination" cell is "100". Therefore, the product stays at the material determination cell for only a time corresponding to the processing time "100", and the product moves to the next cell if no product stays in the next cell. A raw material remaining amount immediately before the subtracted result becomes negative is the excess material amount of the raw material. In this case, the material size of the product is subtracted from a new raw material size.

In the "cutting device" cell, the product that has arrived at the "cutting device" cell stays for only a time corresponding to the processing time "50". Furthermore, in the "cutting device" cell, it is determined whether or not product type information of the product that has arrived at the "cutting device" cell is different from product type information of a previous product that has arrived. If the product type information of the product that has arrived at the "cutting device" cell is different from the product type information of the previous product that has arrived, a changeover occurs. If the changeover has occurred, the product further stays at the "cutting device" cell for only a time corresponding to the processing time "100", and then, moves to the next cell.

In the "processing device" cell, the product that has arrived at the "processing device" cell stays for only a time corresponding to the processing time "150" and moves to the next cell.

Next, the determination unit 60 evaluates a key performance indicator (KPI) for the result of the line simulation performed in step S2 (step S3). In step S3, the determination unit 60 calculates an excess material amount and a production completion time for the line simulation result. The excess material amount is a total value of raw material remaining amounts of respective raw materials that have been used. The production completion time is a time from when a first product is input to start to when a final product arrives at a production completion cell.

Next, the determination unit 60 determines whether or not the excess material amount and the production completion time calculated in step S3 satisfy an end condition (step S4). For example, the determination unit 60 determines whether or not the excess material amount is equal to or less than a threshold and the production completion time is equal to or less than a threshold.

In a case where it is determined as "Yes" in step S4, the execution of the flowchart ends. In a case where it is determined as "No" in step S4, the input order switch unit 50 selects an input order candidate for the input order that is a target of the line simulation in step S2 (step S5). Next, the input order switch unit 50 intersects the input order to be the target of the line simulation in step S2 with the input order candidate selected in step S5 (step S6). Next, the input order switch unit 50 generates an input order by mutating the result of step S6 (step S7). Thereafter, the process from step S2 is executed again. In this case, in step S2, a line simulation is performed for the input order generated in step S7.

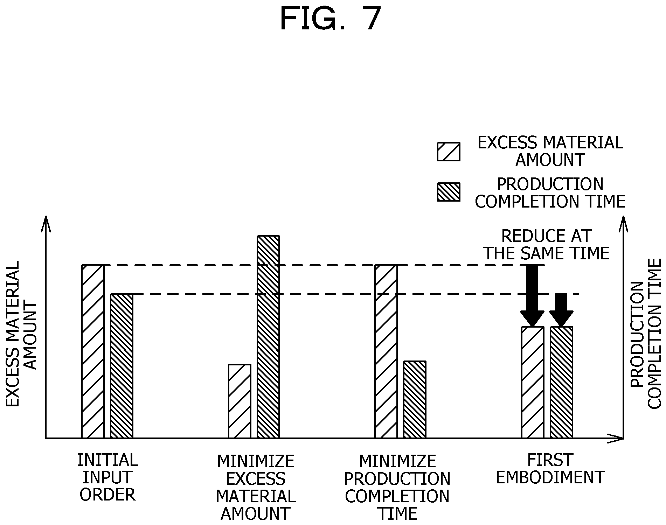

FIG. 7 is a diagram illustrating a result obtained by repeating switching of an input order. As illustrated in FIG. 7, the initial input order often does not consider the excess material amount and the production completion time. Therefore, the excess material amount tends to be larger, and the production completion time also tends to be longer. If the input order is optimized so as to reduce only the excess material amount with respect to the initial input order, although the excess material amount is reduced, the production completion time tends to be longer because the production completion time is not considered. If the input order is optimized so as to shorten only the production completion time with respect to the initial input order, although the production completion time is shortened, the excess material amount tends to be larger because the excess material amount is not considered. However, by switching the input order so that both of the excess material amount and the production completion time are equal to or less than the threshold, the input order can be obtained in which the excess material amount is reduced and the production completion time is shortened.

### (Simulation Result)

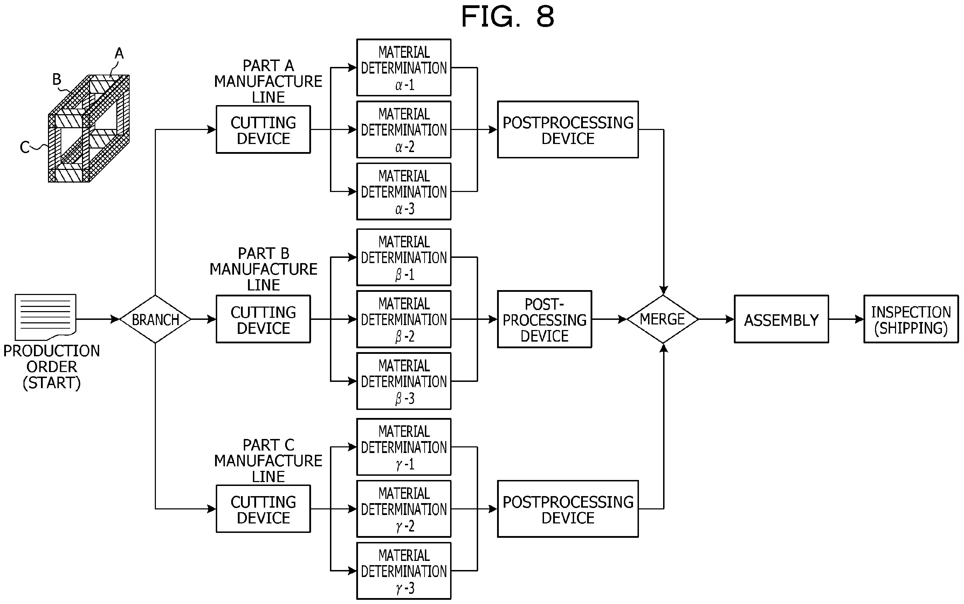

Subsequently, a result of an actual simulation will be described. As illustrated in FIG. 8, a production line is assumed that produces a product including a part A, a part B, and a part C. The production line is separated for each of the parts A to C. Specifically, a "branch" cell is provided between the "start" cell and the "material determination" cell, and a production line for the part A, a production line for the part B, and a production line for the part C are provided. Furthermore, after the "processing device" cell, a "merging" cell used to merge each production line is provided. After the "merging" cell, an "assembly" cell for assembling a product from the parts A to C is provided. A processing time is set to the "assembly" cell.

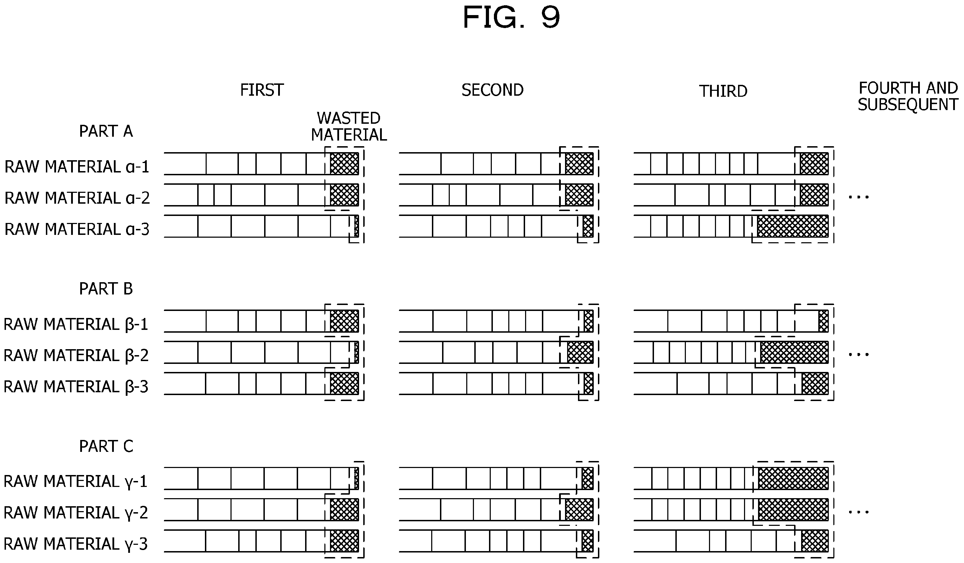

As illustrated in FIG. 9, by changing sizes of the parts A to C for each product, it is assumed that the parts A to C be cut from three types of raw materials α, β, and γ with different materials and three types of shapes 1 to 3 having different cross-sectional shapes. Furthermore, it is assumed that an input order of 156 parts be switched.

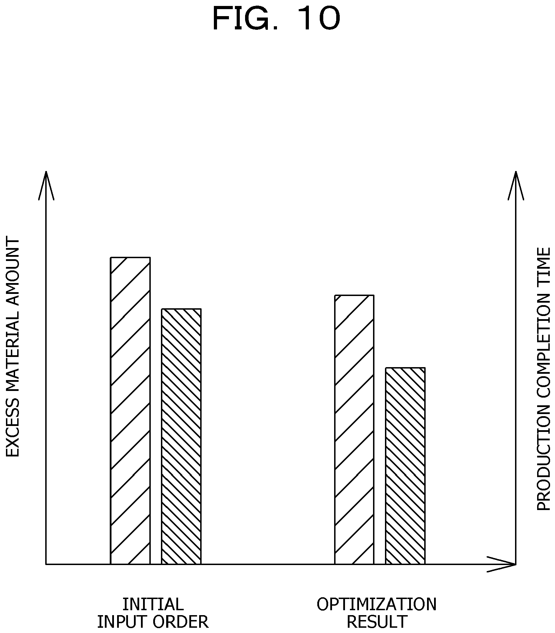

FIG. 10 is a diagram illustrating a simulation result. As illustrated FIG. 10, for the initial input order, the excess material amount has been larger, and the production completion time has been longer. On the other hand, by switching the input order so that both of the excess material amount and the production completion time are equal to or less than the threshold, the input order can be obtained in which the excess material amount is reduced and the production completion time is shortened. Note that, in the simulation result, the excess material amount has been reduced by 10%. The production completion time is shortened by 30%.

According to the present embodiment, it is possible to suppress the excess material amount by switching the input order of each product to the production line and performing optimization, and an objective function reflecting the changeover caused by switching the input order is optimized. As a result, it is possible to improve the objective function reflecting the changeover while suppressing the excess material amount.

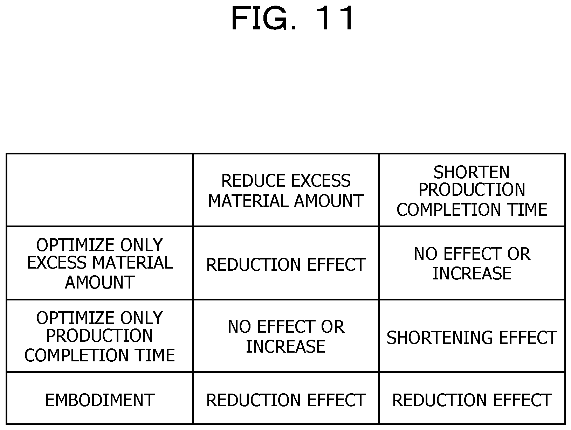

FIG. 11 is a diagram used to organize effects of the present embodiment. As illustrated in FIG. 11, if the input order is optimized to reduce only the excess material amount, although an effect for reducing the excess material amount is obtained, the production completion time is not affected or tends to increase because the production completion time is not considered. If the input order is optimized in order to shorten only the production completion time, although a production completion time shortening effect is obtained, the excess material amount is not affected or tends to increase because the excess material amount is not considered. On the other hand, in the embodiment, the input order is optimized so as to reduce both of the excess material amount and the production completion time. Therefore, an effect for reducing both of the excess material amount and the production completion time can be obtained.

Note that as the method for switching the input order, an evolutionary algorithm and a local search method may be used. These algorithms can also be used for multi-objective optimization. The evolutionary algorithms include an evolutionary strategy algorithm, a genetic algorithm, or the like. The local search methods include an annealing method or the like.

### [Second Embodiment]

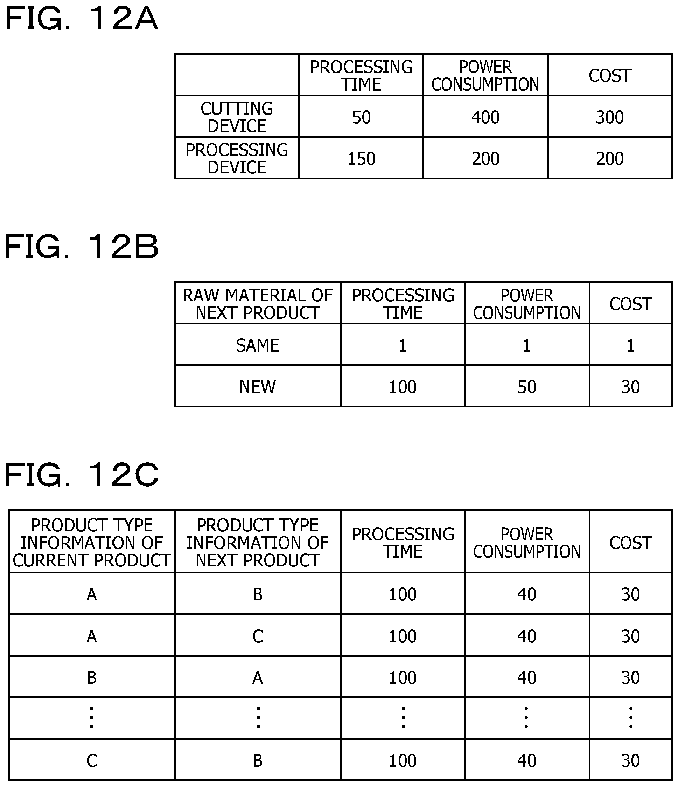

Although the production completion time is used as the objective function in the first embodiment, the present invention is not limited to this. In a second embodiment, a case will be described where a power consumption amount and a cost caused by a changeover are used as objective functions. FIG. 12A is a diagram illustrating device information stored in a production master 20. As illustrated in FIG. 12A, "50" is stored as a processing time of a cutting device, "400" is stored as power consumption of the cutting device, and "300" is stored as a cost of the cutting device. Furthermore, "150" is stored as a processing time of a processing device. "200" is stored as power consumption of the processing device, and "200" is stored as a cost of the processing device. The power consumption of the cutting device is power consumed to cut a material. The cost of the cutting device is a cost for cutting a material. The power consumption of the processing device is power consumed to process a product using the material. The cost of the processing device is a cost for processing a product using the material. The processing times, the power consumption, and the costs of the cutting device and the processing device may be determined for each product.

FIG. 12B is a diagram illustrating a processing time, power consumption, and a cost in a case where a changeover for switching raw materials is performed. In the example in FIG. 12B, the processing time when the raw materials are switched is set to "100", the power consumption is set to "50", and the cost is set to "30". The processing time when the raw materials are not switched is set to "1", the power consumption is set to "1", and the cost is set to "1".

FIG. 12C is a diagram illustrating a processing time, power consumption, and a cost when a changeover for switching a product type is performed. In the example in FIG. 12C, the processing time for switching each product type such as product type switching from a product type A to a product type B is set to "100", the power consumption is set to "40", and the cost is set to "30". The power consumption in this case is power needed for a changeover for switching a product type. The cost in this case is a cost needed for a changeover for switching a product type. The processing times, the power consumptions, and the costs needed for respective times of product type switching may be different from each other.

Subsequently, a line simulation in the second embodiment will be described. A "start" cell performs an operation as in the first embodiment. In a "material determination" cell, a material size of the product arriving at the "material determination" cell is sequentially subtracted from a raw material size of the raw material information. Thereby, a remaining amount of the raw material is calculated. If the subtracted result is positive, a processing time in the "material determination" cell is "1", the power consumption is "1", and the cost is "1". Therefore, the product stays at the material determination cell for only a time corresponding to the processing time "1", and the product moves to the next cell if no product stays in the next cell. Furthermore, the power consumption "1" and the cost "1" are added to the product. If the subtracted result is negative, since the changeover of the raw material occurs, the processing time in the "material determination" cell is "100", the power consumption is "50", and the cost is "50". Therefore, the product stays at the material determination cell for only a time corresponding to the processing time "100", and the product moves to the next cell if no product stays in the next cell. A raw material remaining amount immediately before the subtracted result becomes negative is the excess material amount of the raw material. In this case, the material size of the product is subtracted from a new raw material size.

In a "cutting device" cell, a product that has arrived at the "cutting device" cell stays for only a time corresponding to the processing time "50", power consumption "400" and a cost "300" are added to the product. Furthermore, in the "cutting device" cell, it is determined whether or not product type information of the product that has arrived at the "cutting device" cell is different from product type information of a previous product that has arrived. If the product type information of the product that has arrived at the "cutting device" cell is different from the product type information of the previous product that has arrived, a changeover occurs. If the changeover has occurred, the product further stays at the "cutting device" cell for only a time corresponding to the processing time "100", and then, moves to the next cell.

In the "processing device" cell, the product that has arrived at the "processing device" cell stays for only a time corresponding to the processing time "150" and moves to the next cell.

In the present embodiment, in step S3 in the flowchart in FIG. 6, the determination unit 60 calculates an excess material amount, a production completion time, power consumption, and a cost for a line simulation result. The excess material amount is a total value of raw material remaining amounts of respective raw materials that have been used. The production completion time is a time from when a first product is input to start to when a final product arrives at a production completion cell. The power consumption is a total value of power consumption added to each product. The cost is a total value of costs added to each product. In step S4 in FIG. 6, the determination unit 60 determines whether or not the excess material amount is equal to or less than a threshold and at least any one of the production completion time, the power consumption, and the cost is equal to or less than the threshold.

According to the present embodiment, in addition to the production completion time, the power consumption, the cost, or the like caused by the changeover can be optimized. Note that, in addition to the production completion time, the power consumption, the cost, or the like, the number of changeovers or the like may be included in the objective function.

### (Hardware Configuration)

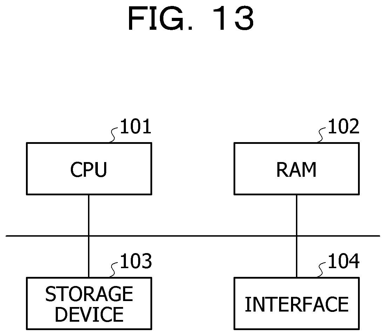

FIG. 13 is a block diagram illustrating a hardware configuration of each unit other than the display device 80 of the information processing device 100. As illustrated in FIG. 13, the information processing device 100 includes a CPU 101, a RAM 102, a storage device 103, an interface 104, or the like.

The central processing unit (CPU) 101 is a central processing unit. The CPU 101 includes one or more cores. The random access memory (RAM) 102 is a volatile memory that temporarily stores a program to be executed by the CPU 101, data to be processed by the CPU 101, or the like. The storage device 103 is a nonvolatile storage device. For example, a read only memory (ROM), a solid state drive (SSD) such as a flash memory, a hard disk to be driven by a hard disk drive, or the like may be used as the storage device 103. The storage device 103 stores a work plan specifying program. The interface 104 is an interface device with an external device. Each unit of the information processing device 100 is implemented by executing the work plan specifying program by the CPU 101. Note that hardware such as a dedicated circuit may be used as each unit of the information processing device 100.

In each example described above, the production line is an example of a work line for a plurality of objects according to a predetermined order. A plurality of products input to the production line is an example of the plurality of objects. The processing device is an example of a working device that performs a work on the plurality of objects. The input order switch unit and the determination unit 60 are examples of an optimization execution unit that optimizes the objective function reflecting the changeover and the excess amount of each raw material determined according to the input order of the plurality of objects to the work line.

While the embodiments of the present invention have been described above in detail, the present invention is not limited to such specific embodiments, and various modifications and alterations may be made within the scope of the present invention described in the claims.

### REFERENCE SIGNS LIST

- 10: production line model storage unit
- 20: production master
- 30: input order generation unit
- 40: simulator
- 50: input order switch unit
- 60: determination unit
- 70: result output unit
- 80: display device
- 100: information processing device

## Claims

1. A work plan specifying program that specifies a predetermined order under conditions that, in a work line that includes a cutting device and a working device and generates a plurality of objects in the predetermined order, a predetermined amount of a material is partially cut by the cutting device from a raw material for each of the plurality of objects, the cut material is processed by the working device, the raw material is switched to a next raw material when the raw material lacks in the cutting device, settings for at least one of the cutting device and the working device are determined for each of the plurality of objects, and a changeover is performed to change the settings of at least one of the cutting device and the working device in a case where the settings are changed, the work plan specifying program causing a computer to execute a process, the process comprising
optimizing an objective function that reflects the changeover and an excess amount of each raw material that are determined according to an input order of the plurality of objects to the work line.

2. The work plan specifying program according to claim 1, wherein when the raw material is switched to the next raw material in the cutting device, the changeover is performed in the cutting device.

3. The work plan specifying program according to claim 1 or 2, wherein the process further comprising
using an evolutionary algorithm when the optimization is executed.

4. The work plan specifying program according to any one of claims 1 to 3, wherein the objective function is the number of times of changeover, a processing time caused by the changeover, power consumption caused by the changeover, or a cost caused by the changeover.

5. The work plan specifying program according to any one of claims 1 to 4, wherein the objective function also reflects a changeover to exchange the raw material.

6. A work plan specifying method that specifies a predetermined order under conditions that, in a work line that includes a cutting device and a working device and generates a plurality of objects in the predetermined order, a predetermined amount of a material is partially cut by the cutting device from a raw material for each of the plurality of objects, the cut material is processed by the working device, the raw material is switched to a next raw material when the raw material lacks in the cutting device, settings for at least one of the cutting device and the working device are determined for each of the plurality of objects, and a changeover is performed to change the settings of at least one of the cutting device and the working device in a case where the settings are changed, the work plan specifying method being executed by a computer, the work plan specifying method comprising
optimizing an objective function that reflects the changeover and an excess amount of each raw material that are determined according to an input order of the plurality of objects to the work line.

7. The work plan specifying method according to claim 6, wherein when the raw material is switched to the next raw material in the cutting device, the changeover is performed in the cutting device.

8. The work plan specifying method according to claim 6 or 7, further comprising
using an evolutionary algorithm when the optimization is executed.

9. The work plan specifying method according to any one of claims 6 to 8, wherein the objective function is the number of times of changeover, a processing time caused by the changeover, power consumption caused by the changeover, or a cost caused by the changeover.

10. The work plan specifying method according to any one of claims 6 to 9, wherein the objective function also reflects a changeover to exchange the raw material.

11. An information processing device that specifies a predetermined order under conditions that, in a work line that includes a cutting device and a working device and generates a plurality of objects in the predetermined order, a predetermined amount of a material is partially cut by the cutting device from a raw material for each of the plurality of objects, the cut material is processed by the working device, the raw material is switched to a next raw material when the raw material lacks in the cutting device, settings for at least one of the cutting device and the working device are determined for each of the plurality of objects, and a changeover is performed to change the settings of at least one of the cutting device and the working device in a case where the settings are changed, the information processing device comprising:
an optimization execution unit configured to optimize an objective function that reflects the changeover and an excess amount of each raw material that are determined according to an input order of the plurality of objects to the work line.

12. The information processing device according to claim 11, wherein when the raw material is switched to the next raw material in the cutting device, the changeover is performed in the cutting device.

13. The information processing device according to claim 11 or 12,
wherein the optimization execution unit uses an evolutionary algorithm when the optimization is executed.

14. The information processing device according to any one of claims 11 to 13, wherein the objective function is the number of times of changeover, a processing time caused by the changeover, power consumption caused by the changeover, or a cost caused by the changeover.

15. The information processing device according to any one of claims 11 to 14, wherein the objective function also reflects a changeover to exchange the raw material.
